# DEMANDE DE BREVET EUROPEEN

(11) **EP 1 062 862 A1**
(43) Date de publication de la demande: **27.12.2000**
(21) Numéro de dépôt: 00401777.8
(22) Date de dépôt: 22.06.2000
(51) Int. Cl.: A01F 25/20

(54) **Désileuse-mélangeuse-distributrice**

(30) Priorité: 24.06.1999 FR 9908088
(71) Demandeur: Etablissements Calvet, 12200 Villefranche de Rouergue (FR)
(72) Inventeur: Calvet, Gilles, 12200 Sanvensa (FR)
(74) Mandataire: Aron, Georges

(57) **Abrégé**

L'invention concerne une machine désileuse-mélangeuse-distributrice de matière ensilée qui comprend des moyens de désilage (13, 50), une cuve destinée à recevoir la matière désilée et des moyens de distribution de la matière désilée à partir de la cuve, caractérisée en ce que la cuve est une cuve cylindrique rotative (3) munie d'un orifice de remplissage (6) occultable.

## Description

L'invention concerne une désileuse-mélangeuse-distributrice.

La pratique de l'ensilage consiste à former un silo de matière, telle que l'herbe ou le maïs, compacté et protégé par une bâche. Cette pratique permet de conserver de l'herbe ou du maïs sous forme fermentée.

Il existe de nombreux dispositifs permettant de prélever une partie de cette matière pour la distribuer aux animaux, notamment des dispositifs de désilage du type à godet destinés à être adaptés sur un engin-porteur.

Les dispositifs de désilage disponibles sur le marché présentent en général, un godet en forme de V ouvert, muni à proximité de son fond d'une vis d'extraction sans fin destinée à délivrer la matière contenue dans le godet, et des moyens de désilage, par exemple, constitués d'un rotor muni de dents ou couteaux (appelés aussi fraise de désilage). Les moyens de désilage ne chargent pas la matière directement dans le godet. Il faut en général, pratiquer une phase de désilage pour extraire une quantité de matière du silo, la matière extraite tombant sur le sol, puis une phase de ramassage de la matière répandue sur le sol au moyen du godet utilisé alors comme une sorte de pelle. Ces dispositifs à godet sont sujets, dans le cas où la matière à désiler est de l'herbe, au phénomène de formation d'une "voûte" d'herbe au-dessus de la vis ce qui rend celle-ci inopérante. Pour lutter contre ce phénomène, il faut prévoir des moyens spéciaux afin d'éviter la formation d'une voûte d'herbe.

Les dispositifs à godet sont, en outre, très volumineux, et la vis d'extraction ne permet pas un vidage très rapide du godet rempli.

Un autre inconvénient de ces dispositifs connus est qu'ils ne permettent pas d'effectuer d'opération de mélange et qu'il faut donc disposer d'un malaxeur en supplément lorsqu'on désire mélanger un additif à la matière désilée.

Il existe donc un besoin pour un dispositif de désilage de matière ensilée et de distribution de la matière désilée qui permettrait aussi d'effectuer des opérations de mélange, tout en étant d'un faible encombrement et exempt du problème de la formation de voûte.

La présente invention vise à satisfaire ce besoin.

Plus précisément, l'invention concerne une machine désileuse-mélangeuse-distributrice de matière ensilée qui comprend des moyens de désilage, une cuve destinée à recevoir la matière désilée et des moyens de distribution de la matière désilée à partir de la cuve, caractérisée en ce que la cuve est une cuve cylindrique rotative munie d'un orifice de remplissage occultable.

Avantageusement, en configuration de travail, l'axe de rotation de la cuve est sensiblement horizontal et perpendiculaire à la direction d'avancement de la machine.

Selon un mode de réalisation les moyens de désilage consistent en une fraise rotative.

Selon un autre mode de réalisation les moyens de désilage consistent en une pelle actionnée hydrauliquement.

Avantageusement, la machine de l'invention présente, en outre, au moins l'une des caractéristiques suivantes :
- les moyens de distribution consistent en un filet de vis solidaire de la surface intérieure de la partie cylindrique de la cuve,
- la cuve comporte une ouverture latérale occultable pour laisser passer la matière distribuée par les moyens de distribution,
- des moyens sont prévus pour canaliser la matière désilée vers l'orifice de remplissage de la cuve.

Lorsque les moyens de désilage consistent en une pelle actionnée hydrauliquement, cette pelle sert, en outre, à fermer temporairement l'orifice de remplissage de la cuve rotative.

La machine de l'invention peut être attelée à un tracteur agricole au troisième point, sur un chargeur avant agricole ou encore sur un chariot à flèche télescopique, selon les cas.

La description qui va suivre faite en se référant aux dessins annexés fera bien comprendre l'invention.

La figure 1 est une vue schématique, en élévation latérale, d'une première machine selon l'invention.

La figure 2 est une vue de dessus schématique de la machine de la figure 1.

Les figures 3 à 5 montrent la machine des figures 1 et 2 dans différentes phases de désilage.

La figure 6 illustre schématiquement une variante de réalisation de la machine des figures 1 et 2.

La figure 7 est une vue schématique, en élévation latérale, d'une autre machine selon l'invention.

La figure 8 montre la machine de la figure 7 dans différentes phases de désilage.

Les figures 9 et 10 illustrent encore un autre mode de réalisation d'une machine selon l'invention.

La figure 11 illustre encore une autre variante de réalisation d'une machine selon l'invention.

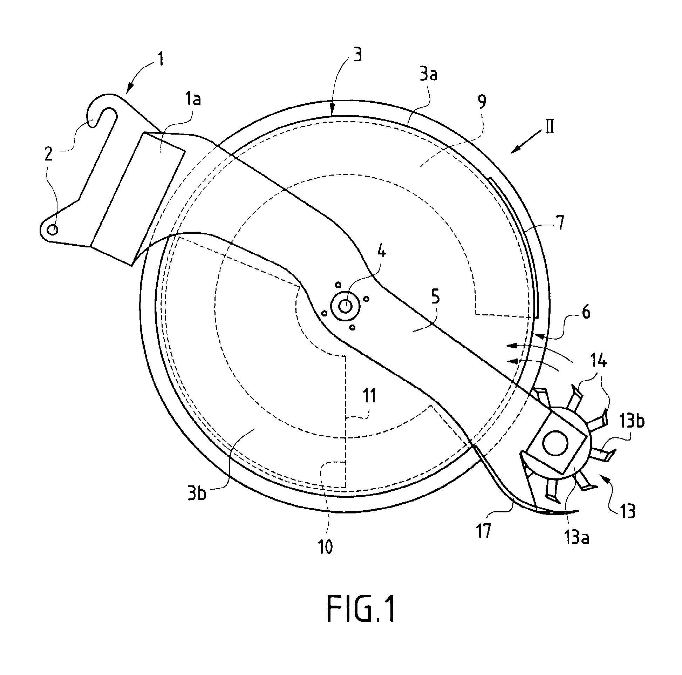

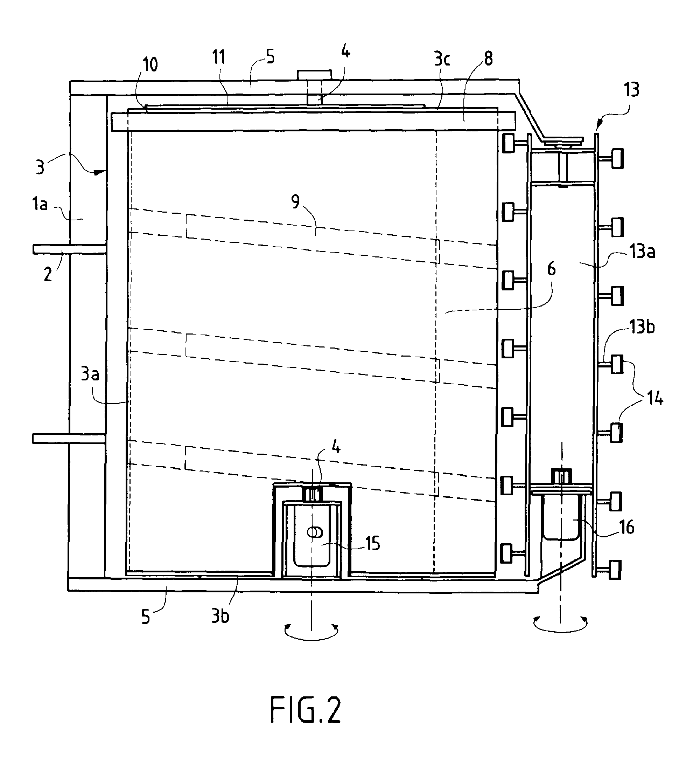

Sur les figures 1 et 2, on a représenté une première machine conforme à l'invention. Cette machine comprend :
- un bâti 1 en forme de U constitué d'une partie intermédiaire 1a pourvue de moyens d'attelage 2 à un engin-porteur et de deux bras 5 solidaires des extrémités de la partie 1a ;
- une cuve cylindrique 3 montée rotative, en 4 sur les bras 5 du bâti 1 et pourvue d'un orifice de remplissage 6 en matière désilée, occultable par un volet coulissant 7. L'axe de rotation de cette cuve est sensiblement horizontal et perpendiculaire à la direction d'avancement de la machine. Cette cuve 3 est constituée d'une paroi cylindrique 3a et de deux flasques verticales circulaires 3b et 3c. La paroi 3a est solidaire de la flasque 3b tandis que la flasque 3c est fixe et solidaire du bâti 1. Un palier à billes 8 est prévu entre la paroi cylindrique 3a et la flasque fixe 3c de façon à permettre la rotation de l'ensemble formé par la paroi 3a et la flasque 3b sur la flasque fixe 3c. Sur la surface intérieure de la paroi cylindrique 3a est fixé, par exemple par soudure, un filet hélicoïdal 9 formant vis (environ 15 cm de haut pour une cuve de 120 cm de diamètre). Ce filet hélicoïdal est interrompu à l'emplacement de l'orifice de remplissage 6 pour ne pas gêner l'entrée de la matière désilée dans la cuve. L'orifice de remplissage 6 peut s'étendre de préférence sur environ 1/8 à 1/10 de la circonférence de la cuve. La flasque fixe 3c est pourvue, à sa partie inférieure, d'une ouverture 10, de forme générale triangulaire, occultable par un volet pivotant 11 commandé, par exemple manuellement ou par un vérin hydraulique (non représenté), pour la sortie de la matière contenue dans la cuve. L'ouverture 10 occupe un peu plus du quart de la surface de la flasque 3c.
- une fraise rotative 13 montée sur les extrémités du bras 5 et, constituée d'un cylindre 13a porteur de rayons 13b sur lesquels sont fixés des couteaux 14 légèrement inclinés, la fraise se trouvant à proximité immédiate de la cuve ;
- des moteurs hydrauliques 15 et 16 pouvant entraîner en rotation, avantageusement dans les deux sens, la cuve 3 et la fraise 13, respectivement ;
- un sabot 17 reliant les extrémités inférieures des bras 5 et prévu juste en dessous de la fraise 13 pour éviter que la matière désilée par la fraise tombe au sol et, en même temps, pour canaliser la matière extraite par la fraise dans l'orifice de remplissage 6. Ce sabot 17 joue, par ailleurs, un rôle protecteur pour la fraise 13 évitant que celle-ci ne soit endommagée par une mise en route intempestive tandis qu'elle serait au contact du sol.

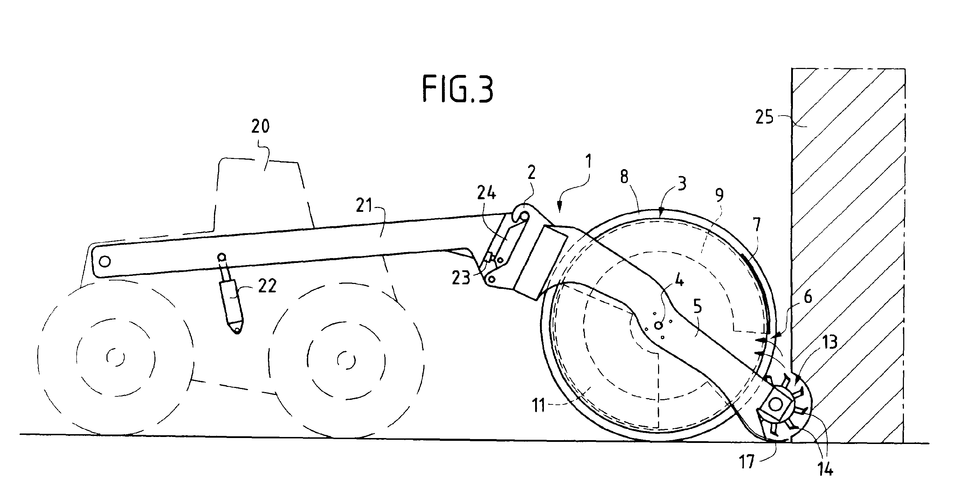

Sur les figures 3 à 5, on a illustré schématiquement la machine des figures 1 et 2 à diverses phases de désilage.

La machine des figures 1 et 2 est conçue pour être portée par un chargeur 20 ayant une flèche pivotante 21 porte-benne actionnée par un vérin hydraulique 22. La machine de l'invention est montée sur le chargeur 20 à la place de la benne habituelle et on utilise le vérin hydraulique 23 commandant l'inclinaison de la tête porte-benne 24 du chargeur pour régler l'inclinaison de la machine par rapport au sol.

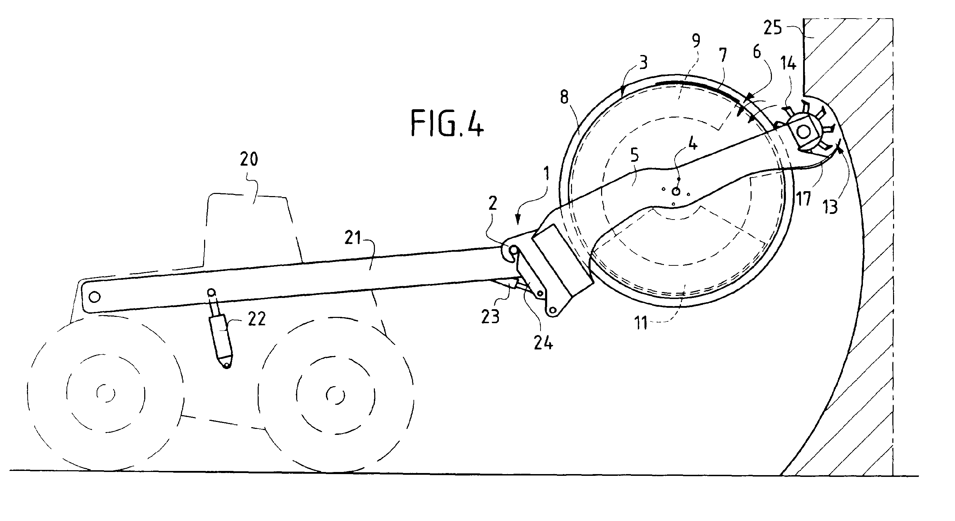

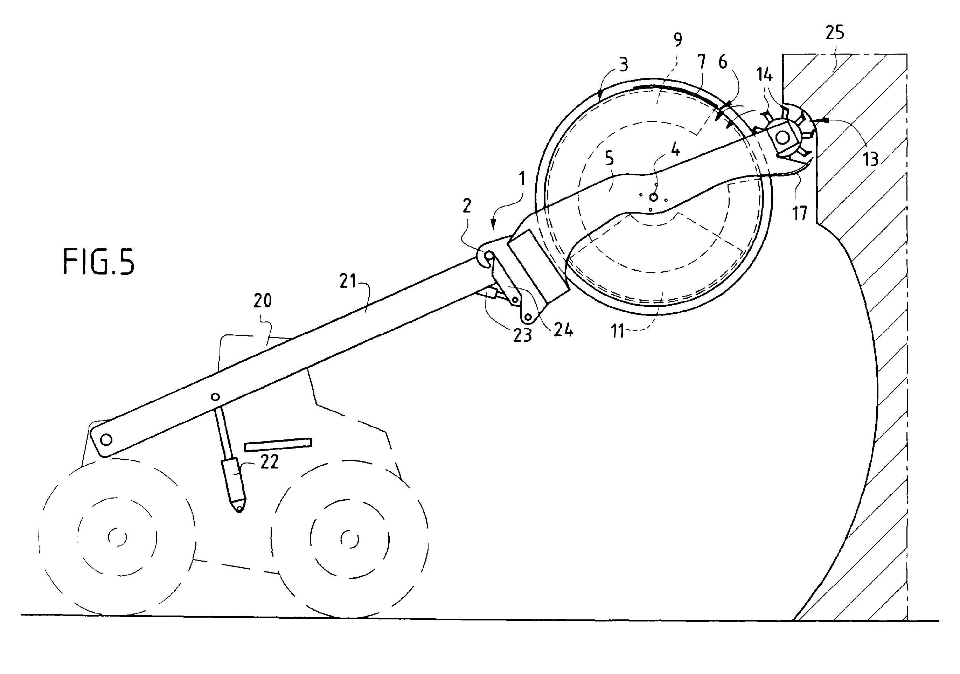

Initialement, on positionne l'orifice de remplissage 6 de la cuve en face de la fraise 13 et on ouvre le volet coulissant 7, puis, la fraise étant en action, on attaque le silo de matière 25 à la base de celui-ci, en inclinant la machine jusqu'à ce que le sabot 17 touche le sol ou soit à proximité de ce dernier comme l'illustre la figure 3. On fait rentrer la fraise dans la matière ensilée jusqu'à une profondeur de 15-20 cm environ. Puis on fait pivoter lentement vers le haut la machine de l'invention en actionnant le vérin 23. Ce faisant la fraise décrit un trajet en forme d'arc de cercle au cours duquel la matière du silo est arrachée par les dents de la fraise et projetée dans la cuve à travers l'orifice de remplissage, jusqu'à ce que la fraise atteigne la position illustrée par la figure 4. A partir de cette position et si la hauteur du silo le nécessite, on relève la flèche 21 du chargeur en actionnant le vérin 22 pour finir le désilage en hauteur, comme l'illustre la figure 5. Bien entendu, d'autres modes d'utilisation de la machine sont possibles, par exemple en jouant simultanément des vérins 22 et 23 et/ou en déplaçant le chargeur 20 par rapport au silo.

Une fois que la cuve est considérée comme suffisamment remplie de matière désilée, on peut, si désiré, pratiquer un mélange de cette matière avec un additif, par exemple un complément alimentaire. Il suffit pour cela, après avoir stoppé la fraise et ramené la cuve à proximité du sol, d'introduire l'additif dans la cuve par l'orifice de remplissage, de fermer cet orifice en faisant coulisser le volet 7, puis de faire tourner la cuve 3 pendant quelque tours.

Enfin, lorsqu'on désire déverser la matière contenue dans la cuve, par exemple dans une auge ou le long d'une barrière (cornadis), il suffit, après avoir positionné la machine à l'endroit désiré pour le déversement, de dégager l'ouverture 10 en faisant pivoter le volet 11, et, tout en faisant lentement avancer l'engin-porteur, de faire tourner la cuve 3 de façon que, sous l'action du filet hélicoïdal 9, la matière soit forcée à sortir par l'ouverture 10, d'où elle se déverse, par exemple, dans une auge ou bien sous forme d'andains sur le sol. Le débit d'extraction de la matière est excellent car le filet hélicoïdal s'étend sur toute la longueur de la cuve. Aucun phénomène de formation de voûte n'est, par ailleurs, observé.

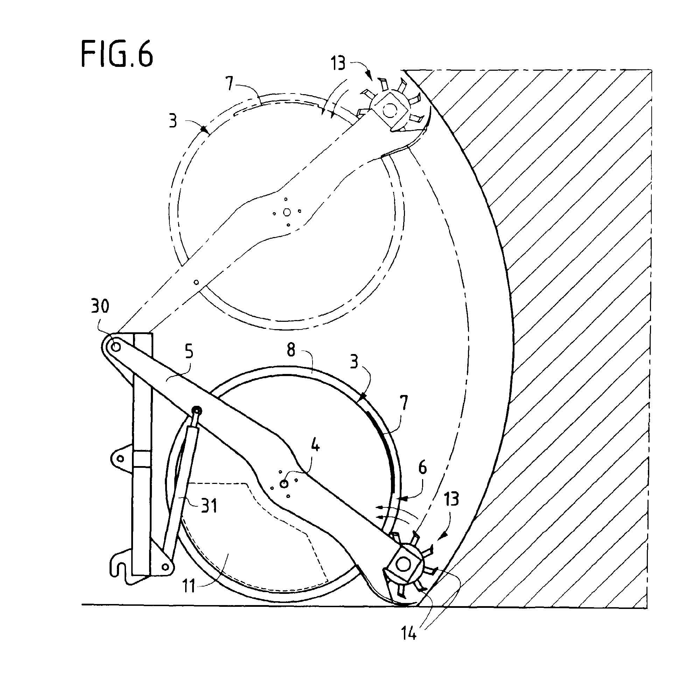

Sur la figure 6, on a représenté une variante de réalisation de la machine des figures 1 et 2, utile lorsque l'engin-porteur est, par exemple, un tracteur agricole ne comportant pas de moyens de levage.

Cette variante ne diffère de la machine des figures 1 et 2 que par le fait que les bras 5, au lieu de constituer un ensemble fixe avec la portion intermédiaire du bâti 1, sont articulés en 30 à cette partie intermédiaire, et qu'il est prévu un vérin hydraulique 31 entre ladite partie intermédiaire 1a et au moins l'un des bras 5 de façon à pouvoir faire pivoter les bras 5 par rapport à la partie 1a, autour des articulations 30, et à faire parcourir à la fraise un chemin en forme d'arc de cercle, comme représenté sur la figure 6 qui montre les deux positions extrêmes pouvant être prises par la machine. En quelque sorte, le vérin 31 exerce l'action qui était dévolue au vérin 23 dans le mode de réalisation des figures 1 et 2.

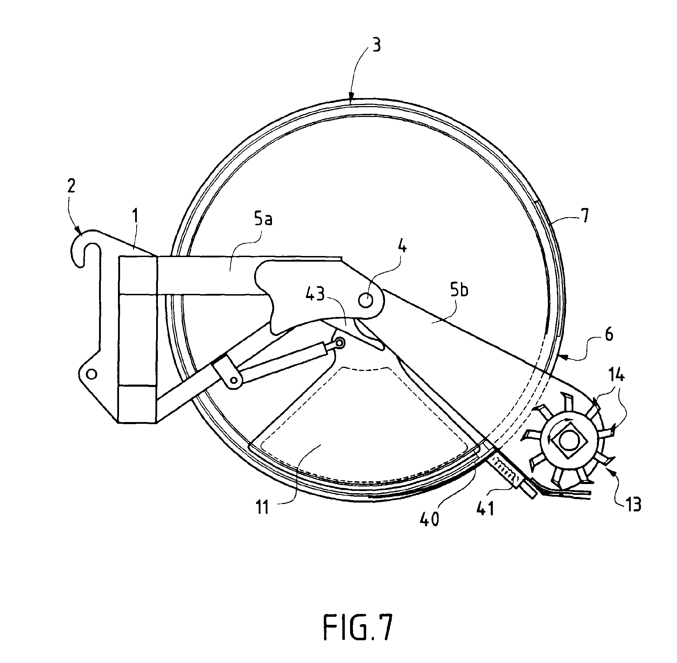

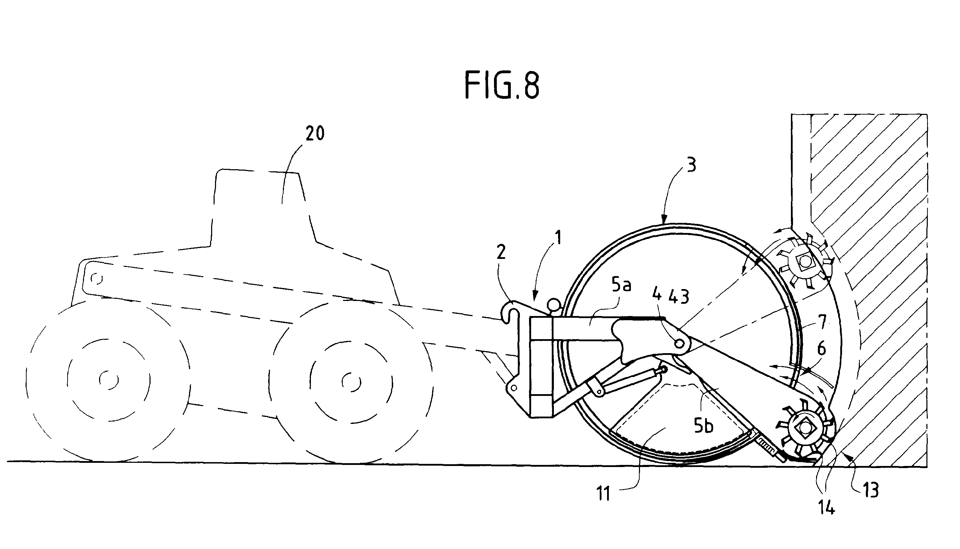

Sur les figures 7 et 8, on a représenté une autre variante de réalisation. Dans cette variante, chaque bras 5 est en deux parties, une première partie fixe 5a solidaire de la partie intermédiaire 1a et une deuxième partie 5b articulée à la partie 5a correspondante, au niveau de l'axe de rotation de la cuve. L'ensemble partie intermédiaire 1a et premières parties 5a supporte la cuve 3, tandis que les parties articulées 5b supportent la fraise 13 et le sabot 17.

La machine des figures 7 et 8 comprend également une came 40 prévue sur la paroi cylindrique 3a de la cuve juste en dessous de l'orifice de remplissage et des butées coulissantes 41 montées chacune sur un ressort 42 de façon à être normalement proéminentes. Les butées sont assujetties sur les parties 5b des bras de façon que ces butées puissent coopérer avec la came 41.

Dans cette variante, c'est la rotation de la cuve qui est utilisée pour faire varier l'inclinaison des parties 5b des bras et, donc, faire varier la hauteur de travail de la fraise 13. En effet, lorsqu'on fait tourner la cuve dans le sens inverse des aiguilles d'une montre, la came 41 vient buter contre les butées 41 et la cuve entraîne dans son mouvement de rotation les parties de bras 5b, et, donc, la fraise 13, lui faisant décrire un arc de cercle, comme l'illustre plus particulièrement la figure 8. Pour redescendre les parties des bras 5b, il suffit d'inverser le sens de rotation de la cuve 3 jusqu'à ce que les parties 5b viennent au contact des butées 43 qui ont pour fonction d'éviter que la fraise ne passe sous la cuve.

Lorsqu'on désire effectuer une opération de mélange d'additif ou bien le déversement de la matière contenue dans la cuve, il convient de faire tourner la cuve dans le sens des aiguilles d'une montre. Dans ce sens de rotation, les butées 41 s'escamotent à chaque passage de la came 40 et n'entravent donc pas la rotation de la cuve.

On notera que dans tous les modes de réalisation qui viennent d'être décrits, à mesure que le remplissage de la cuve progresse, l'orifice de remplissage 6 occupe une position de plus en plus orientée vers le haut, ce qui permet un excellent taux de remplissage de la cuve, avec pas ou peu de risque que la matière ne déborde de la cuve et ne tombe sur le sol.

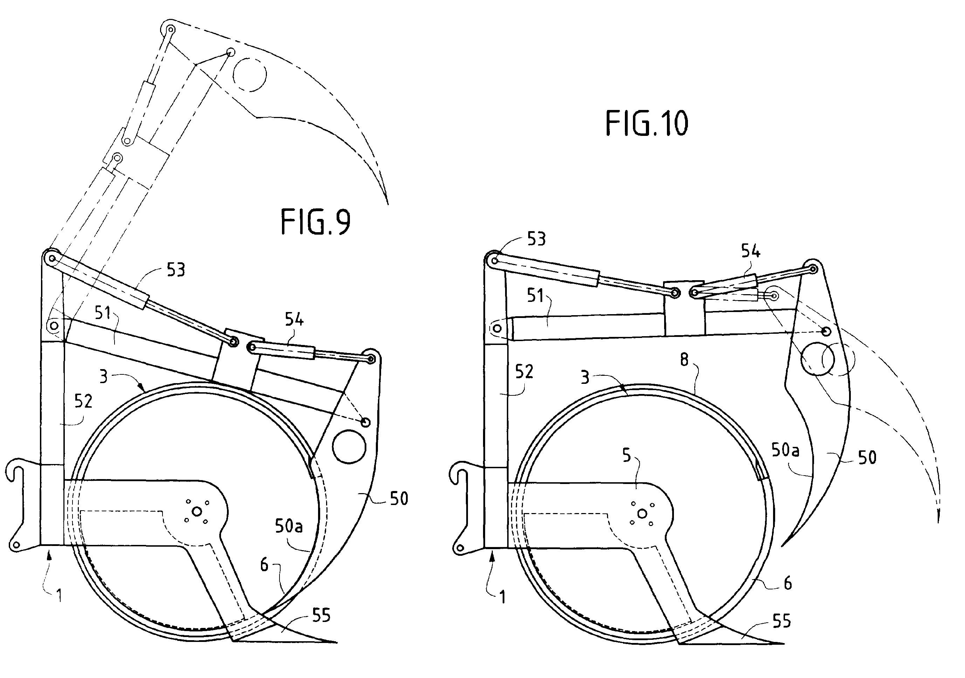

Les figures 9 et 10 illustrent une autre machine conforme à l'invention, convenant notamment pour des silos de hauteur modérée, dans laquelle les moyens de désilage ne sont plus constitués par une fraise rotative, mais par une pelle 50 articulée à l'extrémité d'un bras 51, lui-même articulé sur une potence 52 solidaire du bâti de la machine. Un premier vérin hydraulique 53 permet de faire varier l'inclinaison du bras 51 par rapport à la potence, tandis qu'un deuxième vérin hydraulique 54 permet de faire pivoter la pelle 50 autour du bras 51. La pelle 50 présente, à sa partie inférieure 50a, un profil en arc de cercle. La pelle 50 est dimensionnée de façon que sa partie inférieure arquée 50 puisse venir recouvrir temporairement l'orifice de remplissage 6 de la cuve, comme illustré par la figure 10. Un élément 55 formant seuil incliné est également prévu à la partie inférieure avant de la machine pour guider la matière désilée raclée par la pelle 50 vers l'orifice de remplissage. Cet élément 55 joue, à cet égard, le même rôle que le sabot 17 des modes de réalisation précédents. La pelle 50 est maniée de façon à détacher de la matière du silo, puis on racle avec la pelle le tas de matière détachée à l'intérieur de la cuve, à travers l'orifice de remplissage 6 jusqu'à ce que la pelle arrive dans la position d'obturation temporaire de l'orifice de remplissage illustrée par la figure 10, ce qui permet d'éviter que la matière ressorte de la cuve par l'orifice de remplissage. A ce moment là, on fait légèrement tourner la cuve de façon à amener l'orifice de remplissage vers le haut, c'est-à-dire dans une position où la matière ne peut plus se déverser par l'orifice de remplissage. On peut alors ajouter un ou plusieurs additifs éventuels par l'orifice de remplissage, fermer ce dernier en faisant coulisser le volet 7, et procéder à l'opération de mélange, comme décrit précédemment.

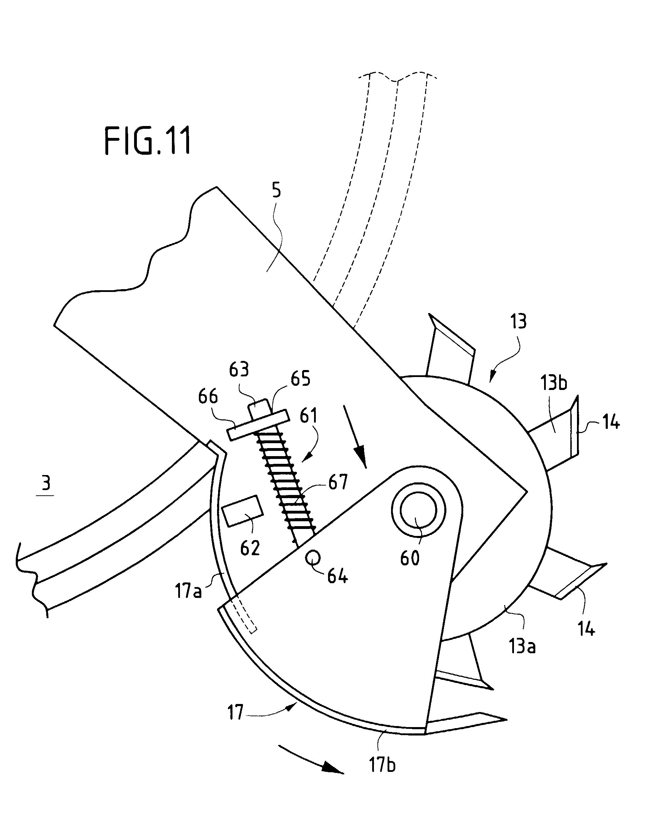

Sur la figure 11 est illustrée une variante de réalisation des machines des figures 1-8. Selon cette variante, le sabot 17, au lieu d'être entièrement fixe, comporte deux parties, une première partie fixe 17a reliant les deux bras 5 et une deuxième partie 17b montée pivotante autour d'axes 60 coaxiaux avec l'axe de la fraise 13, les parties 17a et 17b ayant une zone de chevauchement mutuel. La partie pivotante 17b, en l'absence de force antagoniste, occupe une position extrême avant, sous l'action de systèmes à ressort 61 prévus sur chaque bras. Cette partie 17b est par ailleurs, limitée dans sa possibilité de pivotement vers l'arrière, sous l'effet d'une force antagoniste, par des butées 62 prévues sur les bras 5.

Chaque système à ressort 61 comporte une tige 63 articulée, à une de ses extrémités, en 64 à la partie 17b et, montée coulissante, à son extrémité opposée, dans un orifice 65 percé dans une oreille 66 soudée sur le bras 5, et un ressort 67 enfilé sur la tige 63 entre l'oreille 66 et la partie pivotante 17b.

Cette variante permet d'éviter ou de minimiser les chutes au sol de matière désilée pendant le travail de la fraise 13. Au cours de ce travail, la matière du silo exerce une force antagoniste qui tend à faire pivoter la partie 17b vers l'arrière en compressant les ressorts des systèmes 61. De la sorte, ces derniers tendent à appliquer positivement le bord antérieur de la partie 17b au contact du silo de matière pendant le travail de la fraise, ce qui évite ou minimise les chutes au sol de matière arrachée au silo par la fraise.

Il va de soi que les modes de réalisation décrits ne sont que des exemples et l'on pourrait les modifier, notamment par substitution d'équivalents techniques, sans sortir pour cela du cadre de l'invention.

## Revendications

1. Machine désileuse-mélangeuse-distributrice de matière ensilée qui comprend des moyens de désilage (13, 50), une cuve destinée à recevoir la matière désilée et des moyens de distribution de la matière désilée à partir de la cuve, caractérisée en ce que la cuve est une cuve cylindrique rotative (3) munie d'un orifice de remplissage (6) occultable.

2. Machine selon la revendication 1, caractérisée en ce que les moyens de désilage consistent en une fraise rotative (13).

3. Machine selon la revendication 1, caractérisée en ce que les moyens de désilage consistent en une pelle (60) actionnée hydrauliquement.

4. Machine selon l'une quelconque des revendications 1 à 3, caractérisée en ce que les moyens de distribution consistent en un filet (9) de vis solidaire de la surface intérieure de la partie cylindrique de la cuve.

5. Machine selon l'une quelconque des revendications 1 à 4, caractérisée en ce que la cuve comporte une ouverture latérale (10) occultable pour laisser passer la matière distribuée par les moyens de distribution.

6. Machine selon l'une quelconque des revendications 1 à 5, caractérisée en ce que des moyens (17) sont prévus pour canaliser la matière désilée vers l'orifice de remplissage de la cuve.

7. Machine selon la revendication 3, caractérisée en ce que la pelle (60) sert en outre, à fermer temporairement l'orifice de remplissage (6) de la cuve rotative.

8. Machine selon les revendications 2 et 6, caractérisée en ce que lesdits moyens de canalisation comprennent un sabot (17) prévu en dessous de la fraise rotative.

9. Machine selon la revendication 8, caractérisée en ce que ledit sabot comporte une partie fixe (17a) et une partie (17b) montée pivotante.

10. Machine selon la revendication 9, caractérisée en ce que la partie pivotante (17b) est sollicitée dans une position extrême avant par un système à ressort (61).

11. Machine selon la revendication 1, caractérisée en ce qu'elle comprend un bâti (1) comportant une partie intermédiaire (1a) pourvue de moyens d'attelage (2) et de deux bras (5) sur lesquels est montée la cuve rotative (3).

12. Machine selon la revendication 11, caractérisée en ce que les bras (5) sont articulés sur la partie intermédiaire (1a) et en ce qu'il est prévu un vérin hydraulique (31) entre cette partie intermédiaire et au moins l'un des bras (5).

13. Machine selon la revendication 11, caractérisée en ce que chaque bras (5) est en deux parties, l'une (5a) solidaire de la partie intermédiaire (1) du bâti et l'autre (5b) articulée à la partie (5a) correspondante au niveau de l'axe de rotation de la cuve, et en ce qu'elle comporte des moyens permettant de faire varier l'inclinaison des parties (5b) par rotation de la cuve (3).

14. Machine selon la revendication 1, caractérisée en ce que l'axe de rotation de la cuve est sensiblement horizontal et perpendiculaire à la direction d'avancement de la machine.
